# DEMANDE DE BREVET EUROPEEN

(11) **EP 3 741 447 A1**
(43) Date de publication de la demande: **25.11.2020**
(21) Numéro de dépôt: 20175521.2
(22) Date de dépôt: 19.05.2020
(51) Int. Cl.: B01D 53/047, C01B 13/00, C01B 21/00

(54) **PROCÉDÉ DE RÉGLAGE D'UNE UNITÉ DE PRODUCTION D'OXYGÈNE PAR COMPARAISON DES PRESSIONS DIFFÉRENTIELLES CARACTÉRISTIQUES DES DIFFÉRENTS ADSORBEURS**

(30) Priorité: 23.05.2019 FR 1905446
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: DEHESTRU, Marie, 78350 Les Loges-En-Josas (FR); MONEREAU, Christian, 94503 Champigny-Sur-Marne (FR); BIGOT, David, 78350 Les Loges-En-Josas (FR); MULLER, Clotilde, 78350 Les Loges-En-Josas (FR); AIGUESPARSES, Jean-Claude, 78350 Les Loges-En-Josas (FR)
(74) Mandataire: Condemine, Olivier

(57) **Abrégé**

Procédé de réglage d'une unité de production d'oxygène à partir d'air atmosphérique comportant N adsorbeurs (1,i,N), N étant = ou > à 2, chacun suivant un cycle d'adsorption de type PSA, VSA ou VPSA avec un décalage d'un temps de phase, ledit procédé de réglage comprenant la détermination d'un valeur de pression différentielle caractéristique d'une étape du cycle d'adsorption pour chaque adsorbeur, le calcul de la différence entre les valeurs de pressions différentielle caractéristique des différents adsorbeurs, la comparaison de cette différence avec une valeur cible et la correction en cas d'un écart constaté par modification du transfert d'au moins un flux de gaz riche en oxygène entre adsorbeurs ou éventuellement entre adsorbeur et capacité de stockage.

## Description

La présente invention est relative à un procédé de réglage d'une unité de production d'oxygène à partir d'air atmosphérique comportant des adsorbeurs qui suivent un cycle de pression de type PSA, VSA ou VPSA.

De façon générale, on désigne par les termes PSA tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle) :
- Les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs.
- Les procédés MPSA ou VPSA dans lesquels l'adsorption s'effectue à une pression haute supérieure à la pression atmosphérique, typiquement entre 1.4 et 6 bar abs, et la désorption à une pression basse inférieure à la pression atmosphérique, généralement comprise entre 200 et 600 mbar abs.
- Les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs.

Il convient de noter que ces diverses appellations ne sont pas standardisées et que les limites sont sujettes à variation selon les auteurs.

Avec les définitions précédentes, l'invention concerne aussi bien les procédés PSA, VSA que les procédés VPSA. On notera néanmoins que la majorité des unités industrielles de taille supérieure à une dizaine de tonnes par jour d'oxygène sont de type VSA ou VPSA et que ce sont ces dernières qui sont particulièrement concernées par l'invention. Ces unités comportent généralement 2 adsorbeurs (VPSA), 3 adsorbeurs (VSA) ou 4 adsorbeurs -et éventuellement plus- au-delà d'une production de quelques centaines de t/j d'02.

Par adsorbeur, on entend ici l'équipement qui renferme la masse adsorbante qui décrit le cycle phase après phase. Il s'agit généralement d'une seule enveloppe (cylindrique à axe vertical, à axe horizontal, à circulation radiale...) mais cette masse adsorbante peut également être logée dans une pluralité de modules fonctionnant en parallèle qui se comporte comme un seul adsorbeur. Les descriptions qui suivent concernent le cas général d'adsorbeurs simples mais pourraient être aisément adaptées aux cas de grappes de modules.

On peut classer les moyens de contrôle - commande des P.S.A. en 3 niveaux.

Le premier concerne le réglage des paramètres principaux que l'on veut faire suivre à l'unité en question à savoir principalement la pression de production, la pression basse de régénération, des pressions intermédiaires correspondant à des dépressurisations et/ou repressurisations, les temps d'étapes, la pureté, les quantités entrantes et/ ou sortantes...ces valeurs de base du procédé proviennent en partie des spécifications requises (débit production, pureté...) mais les autres, destinées à réaliser l'unité la plus performante possible compte tenu du contexte industriel, sont déterminées lors de sa conception à partir d'expérimentations, de retours d'unités déjà en service ou de plus en plus de logiciels de simulation de procédé.

Le second niveau selon ce classement, va correspondre à des fonctionnements différents de la marche nominale comme passage à des marches réduites (moins de débit) ou à des marches dégradées (avec moins d'adsorbeurs en fonctionnement). Ce type de régulation a souvent été rajouté pour améliorer les performances dans ces cas d'exploitation particuliers ou faciliter le travail de l'exploitant en automatisant des interventions initialement effectués manuellement.

Par exemple, au lieu de se contenter de réduire la production en tirant moins de gaz de l'unité, on prévoit dans ce cas un nouveau réglage du cycle qui va s'implémenter automatiquement. De même, lorsque le fonctionnement doit s'effectuer avec moins d'adsorbeurs que prévus initialement (pour cause d'entretien, de pannes...), un cycle nouveau se met en place automatiquement en prenant en compte toutes les étapes transitoires nécessaires entre le cycle nominal et ledit nouveau cycle. Le brevet EP 1 517 738 B1 qui propose la mise en œuvre de cycles auxiliaires quand les conditions réelles de fonctionnement s'éloignent de trop des conditions nominales fait également partie de ce niveau.

Le troisième niveau, toujours selon notre classement, correspond aux moyens supplémentaires de contrôle mis en place pour détecter et éventuellement corriger de façon automatique des dérives de l'unité par rapport au fonctionnement normal optimal. Le brevet EP 978 305 B1 de la demanderesse, qui met en œuvre la surveillance de pressions pendant les temps morts du cycle afin de détecter des fuites, appartient typiquement à cette catégorie. Une caractéristique de ce niveau est que les actions programmées peuvent généralement être bloquées sans conduire à la perte de contrôle de l'unité et à son arrêt forcé.

On notera que cette séparation du contrôle/régulation en niveaux est arbitraire et qu'il y a des interactions entre les différents moyens de contrôle/ régulation chaque fois mis en jeu. Cela permet néanmoins de mieux situer le principe de l'invention qui appartient alors clairement au troisième des niveaux que l'on vient de définir.

Pour la production d'oxygène, il existe, à côté de quelques cycles PSA, un grand nombre de cycles VSA ou VPSA qui se différencient essentiellement par l'agencement des différentes étapes constitutives. Quel que soit le cycle envisagé, un adsorbeur va commencer une période d'adsorption jusqu'à ce qu'il soit saturé en N2 à la haute pression, puis va être régénéré par pompage sous vide avant d'être remis en état, en pratique être repressurisé, pour recommencer une nouvelle période d'adsorption. L'adsorbeur a alors effectué un "cycle de pression" et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On peut montrer que le temps de phase est égal au temps de cycle divisé par le nombre d'adsorbeur.

De façon très générale, un cycle comporte des périodes de :
- Production ou Adsorption au cours de laquelle le gaz d'alimentation, ici l'air atmosphérique, est introduit par une des extrémités de l'adsorbeur, l'azote adsorbé préférentiellement et le gaz enrichi en oxygène est extrait par la seconde extrémité. L'adsorption peut se faire à pression montante, à pression sensiblement constante, voire à pression légèrement descendante.
- Dépressurisation au cours de laquelle l'adsorbeur qui n'est plus alimenté en air est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co et contre-courant.
- Elution ou Purge au cours de laquelle un gaz enrichi en oxygène circule à travers le lit d'adsorbant afin d'aider à la désorption des composés les plus adsorbables, H20, CO2, N2. La Purge se fait généralement à contre-courant.
- Repressurisation au cours de laquelle l'adsorbeur est au moins partiellement repressurisé avant de reprendre une période d'Adsorption. La repressurisation peut se faire à contre-courant et/ou à co-courant, avec des flux divers (alimentation, production, flux internes à l'unité).
- Temps mort au cours de laquelle l'adsorbeur reste dans le même état. Ces temps morts peuvent faire partie intégrale du cycle, permettant la synchronisation d'étapes entre adsorbeurs ou faire partie d'une étape qui s'est terminée avant le temps imparti. Les vannes peuvent alors être fermées ou rester en l'état selon les caractéristiques du cycle.
- Dépressurisation et Repressurisation peuvent s'effectuer de différentes manières, surtout lorsque l'unité comprend une pluralité d'adsorbeurs (ou de capacités). On est ainsi amené à définir des étapes élémentaires pour décrire plus exactement les transferts gazeux qui interviennent entre adsorbeurs (ou capacités) et avec le milieu extérieur (circuits d'alimentation, de gaz produit, de gaz résiduaire basse pression)

Ainsi le gaz évacué lors de la période de dépressurisation peut :
- Constituer une seconde production (à pression et teneur inférieures à la production principale par exemple)
- Servir à repressuriser un ou plusieurs adsorbeurs qui se trouvent alors à pression inférieure ; on parle alors d'Equilibrage à pression descendante
- Servir de gaz d'élution (gaz de purge) pour aider à désorber les constituants les plus adsorbables d'un adsorbeur en basse pression ; on parle alors d'Alimentation-Elution (ou de Purge Providing)
- Etre évacué vers l'atmosphère ; on parle alors de Décompression BP ou de Blow Down. Cette évacuation peut se faire par l'intermédiaire d'une simple vanne quand l'adsorbeur est à une pression supérieure à la pression atmosphérique ou par une pompe à vide pour les cycles sous vide.

De la même façon, le gaz que reçoit un adsorbeur lors de sa repressurisation peut provenir :
- Partiellement du gaz d'élution lorsque celle-ci s'effectue à pression montante. On continue généralement dans ce cas de parler d'étape d Elution ou de Purge en spécifiant éventuellement à pression montante. Nous parlerons ici d'élution dans ce cas.
- D'autres adsorbeurs effectuant des équilibrages à pression descendante. On parle alors d'équilibrages à pression montante
- Du gaz Produit
- Du gaz d'alimentation c'est-à-dire de l'air.

Généralement, le gaz de repressurisation est introduit par une extrémité, l'autre étant fermée afin de conserver le gaz introduit dans l'adsorbeur. Il est également connu et utilisé d'introduire simultanément du gaz par les deux extrémités, par exemple de l'air côté alimentation et un flux riche en oxygène côté production.

De ces descriptions générales, on retiendra
- que tous les adsorbeurs suivent exactement le même cycle avec le décalage d'un temps de phase et doivent donc se comporter en théorie de la même façon.
- qu'il existe de nombreux échanges entre adsorbeurs, et en particulier que ces dits échanges concernent essentiellement des gaz enrichis en oxygène., c'est-à-dire en pratique issu de l'extrémité de sortie de l'adsorbeur, côté production.

Ces débits enrichis en oxygène passant de l'un à l'autre adsorbeur doivent être maîtrisés afin d'accomplir le cycle de pression retenu et identiques pour tous les adsorbeurs afin d'assurer le fonctionnement optimal de l'unité de production. Pour ce faire, on met en œuvre une régulation de niveau 1 selon notre définition. Cette régulation est généralement basée soit sur des pressions dans les adsorbeurs ou les capacités, soit sur des différences de pression Delta P entre équipements. On notera qu'on parle d'équilibrage complet quand en fin d'étape les pressions dans les 2 équipements sont égales ou quasi égales (Delta P de l'ordre d'une dizaine de millibars ou moins par exemple) et d'équilibrage incomplet dans le cas inverse. Plus particulièrement, on règle le flux de gaz transféré afin que la pression de référence de fin d'étape soit atteinte au bout du temps imparti. En pratique, cela correspond à régler soit l'ouverture d'une vanne, soit la durée effective d'une étape, par exemple en jouant sur la durée d'un temps mort. La modification de l'ouverture d'une vanne peut s'effectuer de plusieurs manières suivant qu'il s'agisse d'une ouverture constante sur toute la durée de l'étape ou d'une ouverture suivant une rampe plus ou moins complexe. On ne précisera pas plus ici les divers moyens de réglage des transferts de flux qui sont connus de l'Homme de l'Art et ne sont pas au cœur de l'invention qui porte essentiellement sur la détection rapide des déséquilibres entre ces dits transferts.

Ce type de régulation est souvent suffisant pour assurer la bonne marche de l'unité de production d'oxygène néanmoins on a pu constater à plusieurs reprises qu'au bout de quelques semaines ou quelques mois d'opération, on n'obtenait plus les performances initiales. Quelques heures de réglage permettaient parfois de retrouver ces dernières, parfois non. Dans le premier cas, on peut conclure que le réglage n'était plus optimal bien qu'en apparence rien n'ait changé depuis la mise en service de l'unité. Dans le dernier cas, il convient de vérifier en priorité s'il n'y a pas une possible pollution progressive de l'adsorbant mais un dérèglement profond de l'adsorbeur est également une hypothèse plausible.

Par dérèglement profond, on veut signifier qu'un léger déséquilibre entre adsorbeurs des quantités d'oxygène introduites à contre-courant a eu des effets cumulatifs dans le temps qui ont causé une modification des caractéristiques d'adsorption d'au moins un des adsorbeurs. Un retour à l'équilibre desdites quantités d'oxygène -à supposer qu'on puisse le faire- peut alors n'avoir aucun effet apparent dans les heures qui suivent. Ce déséquilibre s'accompagne généralement d'une modification du profil thermique dans l'adsorbant, qui change localement les capacités d'adsorption. Il est connu que le profil thermique dans un VSA ou VPSA O2 est long à s'établir et à réagir à une modification des paramètres. Une des solutions les plus efficace pour sortir de ce genre de situation peut être d'arrêter l'unité pendant 24 ou 48 heures, suivant sa taille, pour la laisser remonter à la température ambiante ou au moins se réchauffer partiellement et de redémarrer ensuite.

Ce dysfonctionnement lié à un déséquilibre entre adsorbeurs a été plusieurs fois identifié et différents remèdes ont été proposés. Il s'agit à chaque fois de rajouter un contrôle sur un paramètre complémentaire mesuré sur l'un et l'autre des adsorbeurs et à prendre des actions correctives en fonction de ces mesures, plus exactement en fonction des écarts entre ces mesures.

Ainsi, afin d'assurer un fonctionnement symétrique entre les adsorbeurs d'une unité VSA ou VPSA, et garantir les meilleures performances possibles :
- le document US 5,407,465 préconise le contrôle de la température dans les lits des différents adsorbeurs, et la modification des quantités de gaz transféré lors des étapes d'équilibrage, de purge ou de recompression oxygène en jouant sur les ouvertures de vannes pour corriger les écarts de températures dans les différents lits. Cette solution est intéressante car elle prend en considération un paramètre, la température au sein du lit, qui est effectivement représentative des différents flux en circulation et par là des déséquilibres. Elle a comme inconvénient le fait que la thermique au sein de l'adsorbant n'est pas immédiate et que l'avertissement de la présence d'un déséquilibre va prendre du temps. Plus gênant, si cette proposition permet de détecter une dissymétrie, elle ne permet pas de savoir quelle est l'étape responsable de ce fait, ni d'estimer avec précision la correction à apporter. Elle mesure une conséquence d'un déséquilibre et non la cause.
- le document US 5,529,607 préconise le contrôle de la pureté du gaz prélevé en sortie des adsorbeurs pendant l'étape de purge, et ajustement de la quantité de gaz de purge introduite dans chaque adsorbeur pour corriger les écarts de pureté mesurés.
- le document EP 1 114 666, propose une idée relativement voisine, basée elle aussi sur le contrôle de la pureté du gaz désorbé, avec correction des étapes d'équilibrage et purge pour avoir le minimum de pureté O2 dans le gaz désorbé identique entre les différents adsorbeurs.

Ces dernières solutions nécessitent d'avoir un système d'analyse adapté avec l'entretien et les calibrations que cela suppose. Elles mettent en évidence une dissymétrie mais là également l'étape en cause n'est pas vraiment déterminée.

Partant de là, un problème qui se pose est de fournir un procédé amélioré de réglage d'une unité de production d'oxygène à partir d'air atmosphérique comportant au moins deux adsorbeurs A et B qui suivent un cycle de pression de type VSA ou VPSA ; autrement dit un procédé qui permet de détecter rapidement un déséquilibre entre adsorbeurs et d'en connaître la cause.

Une solution de la présente invention est un procédé de réglage d'une unité de production d'oxygène à partir d'air atmosphérique comportant N adsorbeurs (1,i,N), N étant = ou > à 2, chacun suivant un cycle d'adsorption de type PSA, VSA ou VPSA avec un décalage d'un temps de phase, ledit procédé de réglage comprenant les étapes suivantes :
a) pour chaque adsorbeur (i), pendant au moins une étape du cycle d'adsorption choisie parmi l'équilibrage, l'alimentation-élution, ou la repressurisation, on mesure en continu la pression différentielle entre au moins deux points choisis entre l'entrée et la sortie de l'adsorbeur, les points de mesure étant identiques pour chacun des N adsorbeurs;
b) on détermine au moins une valeur de pression différentielle caractéristique de l'étape choisie à l'étape a) qui est choisie parmi les pressions différentielles mesurées à l'étape a) ou une fonction de ces pressions ;
c) on calcule la ou les différences (DPi-DPj) entre les valeurs de la pression différentielle caractéristique déterminée pour chacun des adsorbeurs à l'étape b) ;
d) on compare cette ou ces différences (Dpi-DPj) par rapport à la ou les valeurs cibles correspondantes (DPi-DPj)° ; et
e) en cas d'écart entre la valeur de cette ou de ces différences et les valeurs cibles, on corrige un paramètre du cycle d'au moins un adsorbeur pour modifier le transfert d'au moins un flux de gaz riche en oxygène entre adsorbeurs ou éventuellement entre adsorbeur et capacité de stockage de manière à annuler ledit écart.

Le procédé selon l'invention permet ainsi de détecter un déséquilibre entre les adsorbeurs et de corriger ce déséquilibre. Notons que par déséquilibre on entend un déséquilibre des quantités de gaz échangées.

Il convient de noter ici que si le fait de mesurer un débit peut sembler une évidence dès lors qu'on cherche à équilibrer des quantités de gaz échangés, en pratique cette solution est mal adaptée dans le cas qui nous intéresse et pas utilisée. En effet, dans le coût global de l'oxygène, en partie du fait que la matière première est gratuite, la part de l'énergie est prépondérante. Cette énergie est consommée au niveau des machines : pompe à vide et ventilateur ou blower. Il est donc exclu en pratique de rajouter un élément déprimogène sur un des circuits comptant dans la détermination de cette énergie. Pour éviter une consommation énergétique supplémentaire, on peut alors être conduit à rajouter des équipements, comme par exemple un circuit et une vanne dédiée à la repressurisation 02, circuit sur lequel on installerait un orifice calibré destiné à la mesure de ce débit. On pourrait éviter alors de créer une perte de charge additionnelle sur le circuit de production d'oxygène normalement utilisé en sens inverse pour l'étape de repressurisation.

Un élément déprimogène pourrait ne pas avoir d'impact sur des étapes comme l'élution pour laquelle la pression à l'amont de la vanne de réglage est sensiblement plus élevée (environ 1 bar abs) que la pression aval (environ 0.5 bar abs) tout au long de l'étape mais cette vanne étant également utilisée pour d'autres étapes, par exemple un équilibrage, toute restriction locale de passage conduirait pour maintenir certaines durées d'étape à augmenter par compensation les diamètres de passage des tuyauterie et de la vanne. Qui plus est, les mesures de débit nécessitent des longueurs droites de tuyauterie à l'amont et à l'aval de l'organe de mesure. Une telle contrainte complexifierait le skid de vannes et de tuyauterie et en augmenterait le coût, en plus de l'effet des seuls équipements additionnels.

On a cité jusqu'ici le cas de mesure de débit par pression différentielle (diaphragme, venturi, tuyère...) car ils sont peu couteux et faciles à exploiter. Il existe bien d'autres type de débitmètres tels les turbines, les systèmes à ultrason, thermiques, vortex, à effet Coriolis...mais il s'agit là de procédés plus complexes, mal adaptés pour certains aux conditions particulières rencontrées sur les PSA (flux variables en pression, en vitesse, discontinus...)

Il convient de noter également qu'ici, on ne cherche pas à connaître un débit mais seulement à s'assurer que les échanges gazeux sont équilibrés. La mesure d'une perte de charge caractéristique, en dehors de toute normes officielles, peut être utilisée.

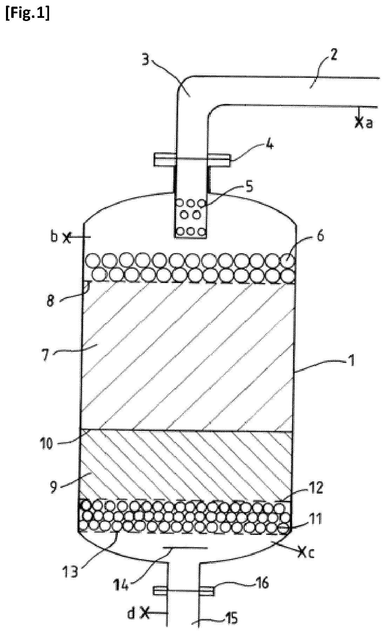

Le procédé selon l'invention utilise à cette fin les pertes de charge crées naturellement par le fluide en circulation au travers d'une partie au moins des éléments constitutifs de l'adsorbeur. La [Fig. 1] illustre sur un exemple, ce qu'il faut entendre par éléments constitutifs de l'adsorbeur. Il s'agit là d'un adsorbeur cylindrique à axe vertical 1 communément utilisé dans les procédés PSA, VSA ou VPSA. En supposant une circulation du fluide du sommet vers la partie inférieure, qui peut être isolée dans le cas d'une repressurisation, ce fluide va traverser une série d'éléments qui vont provoquer une variation de pression (perte de charge par friction, singulière...). On a représenté une tubulure 2, un coude 3, une bride 4, un distributeur supérieur 5, un lit de billes inertes en acier 6 servant au maintien des lits pour éviter l'attrition, un premier lit d'adsorbant 7 qui pourrait être une zéolite échangée au lithium, une grille de séparation 8 pour éviter que les billes inertes de densité élevée ne traversent l'adsorbant, un deuxième lit d'adsorbant 9 qui pourrait être de l'alumine dopée, une toile de séparation 10 entre les adsorbants, une couche de particules inertes 11 servant de support aux adsorbants et améliorant la distribution gazeuse, une grille de séparation 12 pour éviter le passage de l'adsorbant à travers la couche de particules de diamètre généralement plus élevée, une plaque perforée de support 13 maintenant en place l'ensemble des matériaux de l'enveloppe, un déflecteur 14, une tubulure 15 et une bride 16 de sortie.

Il peut y avoir bien sûr des éléments en plus (filtre...) ou en moins (couche de billes de maintien...) suivant les dimensionnements des adsorbeurs, l'essentiel étant de montrer ici que les éléments qui vont servir dans le cadre de l'invention ont une fonction dans le procédé (distribution, maintien, adsorption...) autre à priori qu'une mesure de débit.

Dans le cas d'adsorbeur cylindrique à axe vertical ou d'adsorbeur radial, on retrouverait ces éléments constitutifs mais dans une configuration différente.

Par gaz enrichi en oxygène, on veut signifier les flux extraits de l'adsorbeur par le côté production au cours du cycle. Ils sont largement plus riches en oxygène que l'air, dépassent les 50% O2 et plus généralement les 75% ou 80% 02. Ces teneurs dépendent des cycles utilisés et peuvent varier sensiblement.

Selon le cas, le procédé selon l'invention peut présenter une ou plusieurs des caractéristiques ci-dessous :
- la valeur de la pression différentielle caractéristique de l'étape pendant laquelle elle est mesurée est la valeur instantanée de la pression différentielle à un moment donné de l'étape, la moyenne de mesures effectuées sur au moins une partie de l'étape, la valeur maximale relevée sur au moins une partie de l'étape ou plus généralement une fonction des différentes valeurs des pressions différentielles relevées sur au moins une partie de l'étape ;
- N est compris entre 2 et 4 ;
- chaque adsorbeur comprend au moins un lit adsorbant et les deux points de mesure sont choisis entre l'entrée et la sortie de l'adsorbeur, ou l'entrée de l'adsorbeur et l'entrée dans le lit d'adsorbant, ou l'entrée dans le lit d'adsorbant et la sortie du lit d'adsorbant, ou la sortie du lit d'adsorbant et la sortie de l'adsorbeur ;
- à l'étape e) le paramètre modifié pour corriger le transfert d'un flux de gaz riche en oxygène est choisi parmi un point de consigne de pression-ou de différence de pression- en fin d'étape, et/ou l'ouverture d'au moins une vanne, la durée d'une étape, l'ajout, la suppression ou la modification d'un temps mort ;
- à l'étape a) l'étape du cycle d'adsorption choisie est une étape d'équilibrage à pression descendante ;
- la ou les valeurs cibles sont égales à zéro.
- la ou les valeurs cibles sont déterminées au préalable et correspondent aux valeurs pour lesquelles on obtient le meilleur taux de récupération d'oxygène à la pureté requise.
- à l'étape a) on met en œuvre des capteurs dont l'échelle maximale est d'au plus 200 millibars, par exemple va de -100 millibars à +100 millibars.
- au moins les étapes a) à e) du procédé de réglage sont réalisées de manière automatique.
- après l'étape e) on répète les étapes a) à e) à chaque nouveau cycle des adsorbeurs ou à chaque N' cycles, avec N' compris préférentiellement entre 2 et 2000.

Dans le cas où pour obtenir une distribution homogène des flux, tout en limitant au maximum les volumes morts néfastes à l'obtention de performances optimales, il a été nécessaire d'installer un distributeur dans l'adsorbeur, la perte de charge autour de cet équipement peut servir de base de comparaison. On retiendra alors généralement une mesure de pression différentielle entre l'entrée de l'adsorbeur et l'entrée dans le lit (entre les points a et b de la Fig.1). Cette mesure va alors intégrer un morceau de tuyauterie, un coude, l'entrée dans l'adsorbeur, et le système de répartition du gaz.

La pression différentielle à travers les lits (b, c) peut être utilisée avec quelques précautions pour tenir compte des écarts initiaux éventuels (hauteur des lits, tassement de l'adsorbant...). On reviendra sur ce point ultérieurement.

On peut prendre également comme référence la pression différentielle entre l'entrée et la sortie de l'adsorbeur (a, d).

On parle ici d'entrée et de sortie de l'adsorbeur. Ces termes sont tout relatifs car dans la grande majorité des unités de séparation de gaz par adsorption les différents fluides circulent dans les deux sens. Dans l'idée de l'invention, le sens de circulation n'a pas d'importance en soi. Un flux enrichi en oxygène va sortir d'un adsorbeur à co-courant de la production (donc à priori par la sortie de l'adsorbeur) et entrer dans l'autre adsorbeur par la tête et à contre-courant (donc à priori aussi par la sortie de l'adsorbeur). Les termes entrée et sortie sont juste utilisés pour différencier les deux extrémités de l'adsorbeur.

Notons que les pressions différentielles mesurées seront de préférence supérieure ou égale à 15 mbar, préférentiellement à 25 mbar, préférentiellement encore de l'ordre d'au moins 50 mbar.

Avec les moyens de mesure actuels, on pourra obtenir des dizaines de valeurs de pression différentielle au cours d'une seule étape. Il convient de retenir une valeur caractéristique pour ladite étape qui soit représentative du flux transféré et puisse servir de base de comparaison fiable. Le choix va dépendre du cycle retenu pour le procédé de séparation. La méthode la plus simple est de retenir une valeur instantanée à un moment donné de l'étape, par exemple à la moitié de l'étape. On peut retenir une moyenne des valeurs mesurées sur la totalité de l'étape ou sur une partie de l'étape seulement à supposer par exemple que les toutes premières mesures sont en période par trop transitoire. On peut également retenir la valeur maximale ou une moyenne des N valeurs maximales relevés, avec N=5 par exemple. Comme la perte de charge varie en première approximation comme le carré du débit, on peut effectuer des moyennes à partir des racines carrées des pressions différentielles. Le modèle retenu sera évidemment le même pour tous les adsorbeurs.

Dans le procédé selon l'invention on mesure au cours du temps la différence Delta DP entre les DP(i) des adsorbeurs tel qu'on l'a défini précédemment, on compare ces différences Delta DP avec des valeurs de référence prédéterminées et en cas d'écart entre différence mesurée et différence attendue, on modifie au moins un flux de gaz enrichi en oxygène sur au moins un des adsorbeurs.

Ce n'est donc pas la valeur en soi des seules pressions différentielles que l'on utilise mais aussi préférentiellement l'écart de ces mesures (Delta DP) d'un adsorbeur à l'autre. Ainsi, avec les appellations retenues, on va s'attacher à suivre, outre les DP(i), les valeurs de DP(j)-DP(k), j et k représentant le numéro des adsorbeurs. On pourrait craindre d'avoir à gérer un grand nombre de données, mais en pratique, la très grande majorité des cycles PSA, ou VPSA O2 comportent 2 adsorbeurs (1 et 2) et l'on suivra par exemple DP (1) - DP (2). Dans le cas de VSA comportant 3 adsorbeurs, on pourra suivre DP (1)- DP(2) et DP(2)- DP(3).

Une variation de ces écarts va signifier à priori un déséquilibre survenu entre les débits mis en œuvre. Par exemple sur une unité VPSA O2, alors que l'écart était nul jusque-là, on voit apparaitre un écart de 3 mbar entre les adsorbeurs pendant l'étape d'élution, écart qui continue de se manifester, voire de se creuser, au fil des cycles. La comparaison des pressions différentielles mesurées avec celles escomptées ou mesurées précédemment permet à priori de déterminer s'il faut augmenter le flux venant de l'adsorbeur A ou diminuer le flux issu de l'adsorbeur B pour annuler l'écart constaté. Comme on l'a décrit précédemment, cette modification pourra être effectuée suivant le cycle et le mode de régulation retenus en changeant un point de consigne, en jouant sur l'ouverture d'une vanne ou sur une durée.

Suivant le cycle utilisé, la valeur de la différentielle de pression de référence peut être une constante quelles que soient les conditions opératoires, en particulier quel que soit le débit de production. Inversement, si par exemple la durée de l'étape en question est allongée à débit réduit, le débit de gaz enrichi en oxygène injecté est plus faible, ici le gaz d'élution, et la pression différentielle correspondante va être de ce fait également plus faible. On peut alors noter des variations des pressions différentielles de chaque adsorbeur par rapport au cas nominal mais si le cycle est bien réglé, la différence entre ces pressions différentielles va rester nulle. En effet, DP (1) et DP (2) vont bouger de conserve et leur différence, dans ce cas, restée inchangée. Suivre l'écart entre les adsorbeurs, DP (1) - DP (2), est un bon indicateur relativement bien indépendant des paramètres opératoires.

Dans le cas des VSA qui comportent quant à eux généralement 3 adsorbeurs (1,2 et3), on suivra comme on l'a déjà dit par exemple DP (1) - DP (2), DP (2) - DP (3) et éventuellement DP (3) - DP (1).

Selon une autre caractéristique de l'invention, les valeurs de référence des écarts de pression différentielle DP(i) entre adsorbeurs sont soit égales à zéro, soit préférentiellement déterminées lors de réglage de l'unité de production d'oxygène à fin d'optimisation, à débit nominal ou encore préférentiellement à plusieurs débits caractéristiques de l'exploitation de ladite unité. Compte tenu de la puissance des logiciels de contrôle/ commande, la recherche du fonctionnement optimal de l'unité peut être effectué de façon automatique, par exemple pendant une période de temps réservé à cette fin, suivant le démarrage de l'unité. On pourra ainsi déterminer, par exemple, que l'optimum du cycle est obtenu pour une valeur Delta P non nulle mais égale à + 3 mbar à débit nominal. C'est cette valeur qui servira alors de référence (valeur cible).

Ces indications peuvent être une aide à l'opérateur pour le prévenir qu'un déséquilibre est en train de survenir et lui donner des indications sur la correction à apporter (fermer ou ouvrir telle vanne pendant telle étape sur tel adsorbeur). Préférentiellement, la mesure des pressions différentielles, la détermination de la pression différentielle caractéristique DP (par exemple la valeur maximale de la perte de charge), le calcul des écarts entre les pressions différentielles caractéristiques des adsorbeurs (par exemple DP(1)- DP(2)), la comparaison avec les valeurs cibles correspondant aux conditions d'exploitation de l'unité et l'ajustement des points de consigne, du réglage de la ou des vannes contrôlant le débit de gaz enrichi en oxygène, ou des durées d'étape, sont effectués de façon automatique. On peut décider de valider manuellement les corrections prévues mais en tout état de cause le traitement des données sera préférentiellement automatisé.

Il convient de noter ici que la dérive progressive de l'écart des DP, et la nécessité de modifier à plusieurs reprises la consigne d'une vanne pour corriger cette dérive, est également un indicateur permettant à l'opérateur de diagnostiquer un changement de comportement de la vanne, et donc vraisemblablement une usure précoce. Ce type d'information doit être capitalisé et traité car cela peut permettre de faire de la maintenance préventive et d'éviter ainsi un incident plus grave que le système préconisé ici pourrait ne plus pouvoir gérer.

L'exemple destiné à illustrer le principe de l'invention correspond à un cycle VPSA à deux adsorbeurs comprenant successivement :
- une étape de production d'oxygène
- une seconde étape de production d'oxygène au cours de laquelle une partie de l'oxygène produit est utilisée comme gaz d'élution
- une première étape de décompression à co-courant au cours de laquelle le gaz issu de l'adsorbeur est également utilisé comme gaz d'élution
- une deuxième étape de décompression correspondant à une étape de repressurisation de l'autre adsorbeur
- une étape de pompage sous vide à la fin de laquelle on introduit successivement les deux gaz d'élution déjà mentionnés
- une étape de repressurisation correspondant à la deuxième étape de décompression précédemment mentionnée
- une étape de recompression finale à l'air.

L'unité comprend les régulations de premier niveau dont il a été fait mention au début, à savoir en pratique que toutes les pressions de fin d'étapes sont contrôlées. Compte tenu qu'il s'agit d'un cycle, cela signifie que les pressions de début d'étape sont également contrôlées. Ces régulations se font pour certaines à travers le réglage de l'ouverture des vannes associées au cycle, pour d'autres, lorsque la pression finale dépend d'une machine (blower, pompe à vide) à travers la durée des étapes, par ajustement d'un temps mort. D'autres moyens sont également utilisés selon le cas (vitesse variable, bipasse au niveau de la machine...). D'autres boucles de régulation de premier niveau sont généralement mises en jeu (température entrée adsorbeurs, pureté de l'oxygène, débit production...) mais n'interviennent pas directement sur les pressions.

Un premier contrôle de troisième niveau correspond en pratique à superposer les cycles de pression successifs (P en fonction du temps de cycle) et à détecter les écarts éventuels d'une phase à l'autre. Cela consiste plus précisément à comparer la pression de l'adsorbeur 1 à la pression de l'adsorbeur 2 en prenant la même origine des temps, par exemple le début de la phase de production. La pression sur chacun des adsorbeurs est évidement prise au même emplacement, à l'entrée et / ou en sortie d'adsorbeur préférentiellement. On reviendra sur cette méthode lors de la comparaison avec la solution selon l'invention. On pourra noter que cette méthode est facilement automatisable, qu'elle permet de déterminer l'étape au cours de laquelle apparait un écart entre les adsorbeurs et, par comparaison avec les cycles précédents, lequel des deux adsorbeurs s'est écarté des conditions nominales et dans quel sens.

Cette méthode est très efficace pour détecter immédiatement un problème sur une vanne qui s'ouvrirait trop ou pas assez, mais a ses limites, comme on va l'illustrer dès lors qu'il s'agit seulement d'un léger déséquilibre qui va pouvoir occasionner pourtant après un certain nombre de cycle une perte de performances dommageable.

Alors que le contrôle de la pureté de la production est selon notre classement de premier niveau, le contrôle périodique de la teneur de l'oxygène en sortie de chaque adsorbeur est de troisième niveau. On sait que la teneur de l'oxygène en sortie d'un adsorbeur est fluctuante et que la production d'oxygène pour la quasi-totalité des cycles VPSA à 2 adsorbeurs n'est pas continue. Pour ces raisons, une capacité de production O2 est associée aux adsorbeurs et fait partie intégrante de l'unité VPSA. La pureté de la production est mesurée en sortie de capacité et reflète donc une teneur moyenne.

La comparaison des teneurs instantanées en sortie de chacun des adsorbeurs apporte donc des renseignements complémentaires sur leur fonctionnement relatif. Il n'y a généralement pas d'actions correctives prises automatiquement sur ces analyses mais c'est un moyen de savoir si une action faite par ailleurs va dans le bon sens (les puretés se rapprochent) ou non (l'écart entre les puretés se creuse).

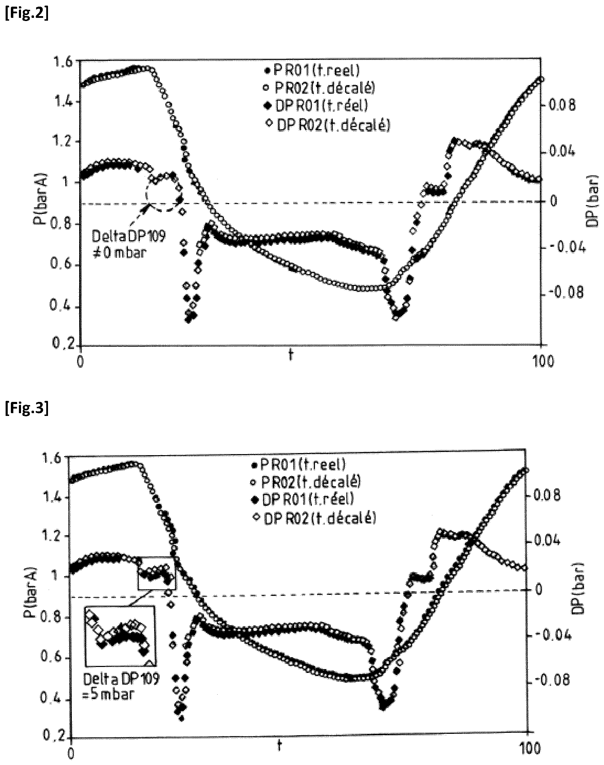

Dans le cadre de l'invention, comme pour la pression au cours du temps, la pression différentielle a été traitée de façon à superposer les courbes obtenues pour chacun des adsorbeurs. L'unité ayant été réglée préalablement, on n'observe aucune différence significative entre les deux adsorbeurs, que ce soit pour la pression de cycle ou la pression différentielle. La **[****Fig. 2****]** qui est une reproduction des enregistrements effectués illustre ce point. En abscisse figure le temps normalisé, 100 correspondant au temps de cycle, en ordonnées figure sur l'échelle de gauche la pression de cycle de 0.2 à 1.6 bar abs. Et sur l'échelle de droite la différentielle de pression (+100/-100 mbar). Les temps de phase pour ce type d'unité est compris entre 10 et 20 secondes. On vient de terminer l'enregistrement de la pression P et de la différentielle de pression DP de l'adsorbeur R01. Le début de l'enregistrement correspond au début de la première étape de production. Au cours du cycle (t de 0 à 100), chaque point relevé pour la pression de R01 est comparé au point équivalent du cycle effectué par l'adsorbeur R02. Il en est de même pour les pressions différentielles DP de R01 et R02.

Un premier point que l'on peut noter est que la variation de la pression dans l'adsorbeur est rapide (>0.1 Bar/s) dans une majorité d'étapes alors que la fréquence d'acquisition d'un système industriel est généralement au mieux d'une centaine de millisecondes. Pour les capteurs de pression, il s'agit également d'équipements de mesure industriels qui possèdent leur propre incertitude. Tout ceci a comme conséquence une incertitude sur la position relative des points représentant la pression des adsorbeurs. Quelques millibars d'écart entre la pression de l'adsorbeur 1 et l'adsorbeur 2 pris au même moment du cycle mais un temps de phase plus tard ne sont pas significatifs et ne peuvent pas être associés de façon certaine à un début de déséquilibre. L'unité peut fonctionner ainsi, malgré cet écart apparent, pendant des semaines sans conséquence notable.

On va s'intéresser ici plus particulièrement à la première décompression suivant la fin de la production. Il s'agit d'une étape très courte, de quelques secondes, au cours de laquelle, un adsorbeur va envoyer vers le second, une grande quantité d'oxygène. Il convient de savoir en effet que la production nette d'oxygène sortant d'un adsorbeur représente moins de la moitié du flux total d'oxygène émis au cours des différentes étapes à co-courant. Parmi les flux autres que la production, la première décompression correspond au flux le plus important au moins dans le cas du cycle utilisé. Un écart sur ce flux va se traduire immanquablement par un déséquilibre des bilans oxygène entre adsorbeurs qui va se traduire au bout d'un certain temps par la perte de la pureté à débit de production constant ou à une baisse du débit de production en présence d'une régulation sur la teneur de l'oxygène.

L'écart entre les pressions différentielles est appelé Delta DP 109 dans cette figure ainsi que dans celles qui suivent.

La [Fig. 3] correspond à un point de fonctionnement ultérieur au cours duquel un écart sur les différentielles de pression est nettement apparu (de l'ordre de 5 mbar) lors de cette étape de première décompression à co-courant. Le suivi de la pression dans les adsorbeurs continue de ne pas montrer de différence significative. Un tel fonctionnement de l'unité a conduit pourtant à une perte de performance non négligeable. A débit constant, la teneur de la production initialement de 93% O2 s'est rapprochée des 90%. Cela équivaut à une baisse de l'ordre de 5 % du débit de production si on avait voulu conserver la teneur.

Il convient de noter que dans le cas de la mesure de la pression différentielle, on utilise comme dit plus haut, un capteur -100/ +100 millibars nettement plus précis que le capteur de pression dont l'échelle va de 0 à 2 bar abs. D'autre part, sur des étapes d'intérêt, comme la première décompression à laquelle on s'intéresse, l'évolution simultanée du débit transféré et de la pression amont dans l'adsorbeur conduit à ce que la différentielle de pression varie relativement peu entre le début et la fin de l'étape. Sur l'étape considérée, la variation est inférieure à 5 mbar. Globalement, on obtient une précision nettement supérieure et ici, un écart de quelques millibars est facilement mis en évidence et effectivement représentatif d'un déséquilibre entre adsorbeurs.

A la suite de ces constatations, des séries d'essais ont été effectuées en modifiant volontairement le réglage de la vanne régulant la première décompression après que l'unité ait été optimisée. A débit de production constant, la pureté a été mesurée en fonction de l'écart maximum observé entre les pressions différentielles des deux adsorbeurs, à savoir DP(1) - DP(2).

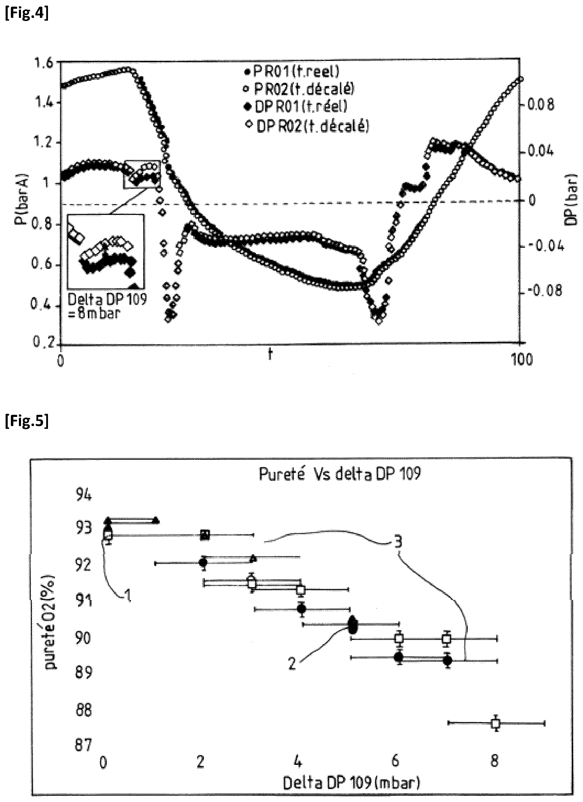

Il a été obtenu une courbe répétitive, linéaire en première approximation jusqu'à atteindre une pureté de 90%, phénomène qui semble ensuite s'aggraver si le déséquilibre augmente encore comme représenté sur la **[****Fig. 5****]**. Le point référencé (1) est le point de réglage initial, le point (2) est le point de fonctionnement au cours duquel on a constaté simultanément une baisse des performances, des courbes de pression apparemment bien équilibrées, un écart sur les pressions différentielles au cours de l'étape de première décompression. Les points (3) correspondent à des déséquilibres volontaires créés en fermant de quelques pourcents la vanne réglant le débit de décompression.

Il a été constaté ultérieurement à ces essais qu'un léger déséquilibre de l'ordre de -2 à -3 mbar, c'est-à-dire de l'autre côté de la zone explorée permettait d'améliorer les performances et de dépasser les 93.5 % de pureté. Cela justifie le fait qu'il est préconisé de prévoir une phase d'optimisation comme évoqué au début du document et de ne pas se limiter à vouloir régler un écart nul. Une des causes potentielles est que la densité de remplissage, les hauteurs respectives des divers adsorbants utilisés ne sont pas forcément identiques d'un adsorbeur à l'autre. Pour cela, il peut être préférable de mesurer la pression différentielle à travers un organe qui peut être facilement calibré. Utiliser un distributeur, comme celui la référence (5) de la **[****Fig. 1****],** peut être un bon compromis.

La **[****Fig. 4****]** illustre juste le fait qu'avec un déséquilibre conséquent (8 mbar), le suivi des pressions dans les deux adsorbeurs est de peu d'utilité. La superposition de ces pressions pendant ces mêmes essais n'attire en effet pas particulièrement l'attention. Avec ce seul critère, la conclusion aurait été que le fonctionnement de l'unité était équilibré vis-à-vis des deux adsorbeurs et qu'il fallait chercher ailleurs la cause de la baisse des performances. Une telle conclusion peut avoir des conséquences importantes pour l'exploitation de l'unité (arrêt pour recherche de pollution du tamis par exemple).

Enfin, la présente invention a également pour objet une unité de production d'oxygène à partir d'air atmosphérique comportant au moins deux adsorbeurs A et B qui suivent un cycle de pression de type VSA ou VPSA et comportant des moyens permettant le réglage de l'unité selon l'invention.

## Revendications

1. Procédé de réglage d'une unité de production d'oxygène à partir d'air atmosphérique comportant N adsorbeurs (1,i,N), N étant = ou > à 2, chacun suivant un cycle d'adsorption de type PSA, VSA ou VPSA avec un décalage d'un temps de phase, ledit procédé de réglage comprenant les étapes suivantes :
a) pour chaque adsorbeur (i), pendant au moins une étape du cycle d'adsorption choisie parmi l'équilibrage, l'alimentation-élution, ou la repressurisation, on mesure en continu la pression différentielle entre au moins deux points choisis entre l'entrée et la sortie de l'adsorbeur, les points de mesure étant identiques pour chacun des N adsorbeurs;
b) on détermine au moins une valeur de pression différentielle caractéristique de l'étape choisie à l'étape a) qui est choisie parmi les pressions différentielles mesurées à l'étape a) ou une fonction de ces pressions ;
c) on calcule la ou les différences (DPi-DPj) entre les valeurs de la pression différentielle caractéristique déterminée pour chacun des adsorbeurs à l'étape b) ;
d) on compare cette ou ces différences (Dpi-DPj) par rapport à la ou les valeurs cibles correspondantes (DPi-DPj)° ; et
e) en cas d'écart entre la valeur de cette ou de ces différences et les valeurs cibles, on corrige un paramètre du cycle d'au moins un adsorbeur pour modifier le transfert d'au moins un flux de gaz riche en oxygène entre adsorbeurs ou éventuellement entre adsorbeur et capacité de stockage de manière à annuler ledit écart.

2. Procédé selon la revendication 1, **caractérisé en ce que** la valeur de la pression différentielle caractéristique de l'étape pendant laquelle elle est mesurée est la valeur instantanée de la pression différentielle à un moment donné de l'étape, la moyenne de mesures effectuées sur au moins une partie de l'étape, la valeur maximale relevée sur au moins une partie de l'étape ou plus généralement une fonction des différentes valeurs des pressions différentielles relevées sur au moins une partie de l'étape.

3. Procédé selon l'une des revendications 1 ou 2, **caractérisé en ce que** N est compris entre 2 et 4.

4. Procédé selon l'une des revendications 1 à 3, **caractérisé en ce que** chaque adsorbeur comprend au moins un lit adsorbant et les deux points de mesure sont choisis entre :
- l'entrée et la sortie de l'adsorbeur, ou
- l'entrée de l'adsorbeur et l'entrée dans le lit d'adsorbant, ou
- l'entrée dans le lit d'adsorbant et la sortie du lit d'adsorbant, ou
- la sortie du lit d'adsorbant et la sortie de l'adsorbeur.

5. Procédé selon l'une des revendications 1 à 4, **caractérisé en ce qu'**à l'étape e) le paramètre modifié pour corriger le transfert d'un flux de gaz riche en oxygène est choisi parmi un point de consigne de pression-ou de différence de pression- en fin d'étape, et/ou l'ouverture d'au moins une vanne, la durée d'une étape, l'ajout, la suppression ou la modification d'un temps mort.

6. Procédé selon l'une des revendications 1 à 5, **caractérisé en ce qu'**à l'étape a) l'étape du cycle d'adsorption choisie est une étape d'équilibrage à pression descendante.

7. Procédé selon l'une des revendications 1 à 6, **caractérisé en ce que** la ou les valeurs cibles sont égales à zéro.

8. Procédé selon l'une des revendications 1 à 6, **caractérisé en ce que** la ou les valeurs cibles sont déterminées au préalable et correspondent aux valeurs pour lesquelles on obtient le meilleur taux de récupération d'oxygène à la pureté requise.

9. Procédé selon l'une des revendications 1 à 8, **caractérisé en ce qu'**à l'étape a) on met en œuvre des capteurs dont l'échelle maximale est d'au plus 200 millibars, par exemple va de -100 millibars à +100 millibars.

10. Procédé selon l'une des revendications 1 à 9, **caractérisé en ce qu'**au moins les étapes a) à e) du procédé de réglage sont réalisées de manière automatique.

11. Procédé selon l'une des revendications 1 à 10, **caractérisé en ce qu'**après l'étape e) on répète les étapes a) à e) à chaque nouveau cycle des adsorbeurs ou à chaque N'cycles, avec N'compris préférentiellement entre 2 et 2000.

12. Unité de production d'oxygène à partir d'air atmosphérique comportant au moins deux adsorbeurs A et B qui suivent un cycle de pression de type PSA, VSA ou VPSA et comportant des moyens permettant la mise en œuvre du procédé de réglage de l'unité selon l'une des revendications 1 à 11.
